# FASCICULE DE BREVET EUROPEEN

(11) **EP 0 541 834 B1**
(45) Date de publication et mention de la délivrance du brevet: **01.05.1996**
(21) Numéro de dépôt: 91119150.0
(22) Date de dépôt: 11.11.1991
(51) Int. Cl.: A21B 3/13, A21C 9/08

(54) **Plateau pour la réalisation d'un produit alimentaire tel qu'une pizza, procédé pour réaliser ledit produit alimentaire et produit final obtenu**
Form für die Vorbereitung von Esswaren z.B. Pizzas sowie Verfahren der Vorbereitung und hergestelltes Endprodukt
Plate for the preparation of a food product, such as a pizza, method for the preparation of such a food product and final product

(43) Date de publication de la demande: 19.05.1993
(73) Titulaire: FRISCO-FINDUS AG, CH-9400 Rorschach (CH)
(72) Inventeur: Gueroult, Alain, F-60000 Goincourt (FR)

(56) Documents cités:
- DE-A- 1 757 282
- US-A- 1 343 395
- US-A- 4 364 963

## Description

La présente invention est relative à un plateau pour la réalisation d'un produit alimentaire constitué d'un fond et d'une garniture, au procédé pour réaliser le dit produit alimentaire et au produit final obtenu.

Les produits alimentaires constitués d'un fond et d'une garniture, tels que les pizzas, sont habituellement réalisés de la façon suivante.

Une feuille de pâte alimentaire est découpée pour constituer le fond de la pizza puis la garniture est disposée sur le dit fond lui-même placé sur un support. Il se pose alors des problèmes importants de répartition de la garniture au-dessus du dit fond. En effet, il est pratiquement impossible d'obtenir une distribution homogène et régulière de la garniture sur ce fond. Plus particulièrement, la garniture tend à s'étaler et se retrouve ainsi plus ou moins éloignée du bord du fond. Parfois, il peut même arriver que la garniture déborde et s'écoule sur le support sur lequel le fond est posé.

Le brevet US 1,343,395 concerne un plateau pour contenir une tourte et comportant un fond, une paroi latérale, une première collerette et une partie supérieure incurvée; ce système ne permet pas un poinçonnage correct de la pâte si le plateau n'est pas suffisamment rigide. On peut faire la même remarque s'agissant du brevet US 4,364,963 qui concerne un conteneur classique pour une garniture et une feuille de pâte comportant un fond et un rebord simple.

La présente invention a ainsi pour but la réalisation d'un produit alimentaire tel qu'une pizza qui permette une distribution régulière de la garniture sur le fond et un poinçonnage correct de la pâte à pizza.

Or, il a été trouvé qu'en utilisant un plateau de forme particulière, il est possible d'atteindre ce but.

La présente invention a ainsi pour objet un plateau pour la réalisation d'un produit alimentaire constitué d'un fond en pâte alimentaire et d'une garniture, muni d'un fond et d'une paroi latérale dont la partie supérieure présente une première collerette inférieure s'étendant dans le sens radial externe, et une deuxième collerette supérieure, plus haute que la première et dont le bord interne est radialement externe par rapport au bord externe de la première collerette inférieure, reliée à cette première collerette inférieure par un flanc et dans lequel la collerette supérieure est prolongée vers le bas par une paroi qui s'étend jusqu'au niveau du fond du plateau.

La présente invention a aussi pour objet un procédé pour réaliser un produit alimentaire, constitué d'un fond en pâte alimentaire et d'une garniture, dans lequel la garniture est disposée dans un plateau du type décrit ci-dessus jusqu'à atteindre le niveau de la collerette inférieure du plateau puis, une feuille de pâte alimentaire est placée au-dessus dudit plateau et appliquée contre la collerette supérieure du plateau jusqu'à découper par poinçonnage la feuille de pâte alimentaire qui vient s'appuyer sur la collerette inférieure du plateau et dans lequel, lors du poinçonnage de la feuille de pâte alimentaire, un anneau est placé sous la collerette supérieure.

La présente invention a enfin pour objet un produit alimentaire, constitué d'une garniture et d'un fond en pâte alimentaire, placé dans un plateau du type décrit ci-dessus, dans lequel la garniture est située à la partie inférieure du plateau, la face supérieure de la garniture étant au niveau de la collerette inférieure du plateau, le fond en pâte alimentaire étant situé au-dessus de la garniture, le bord de ce fond étant limité radialement par le flanc du plateau reliant les collerettes inférieure et supérieure.

Grâce à l'invention, il est ainsi possible d'obtenir un produit fini dans lequel la garniture ne déborde pas du fond en pâte alimentaire. Par ailleurs, le produit fini, par exemple une pizza, pouvant être surgelé, il est protégé par le plateau dans son emballage et permet ainsi une meilleure facilité de manutention et de stockage.
le produit fini est destiné, après avoir été ôté de son plateau, à être cuit dans un four.

D'autres caractéristiques et avantages ressortiront à la suite de la description qui va suivre faite en référence aux dessins annexés donnés seulement à titre d'exemple non limitatif parmi lesquels :
- La Fig. 1 représente une vue en coupe du plateau selon l'invention
- La Fig. 2 représente une vue en schématique en coupe de la réalisation d'une pizza dans le plateau selon l'invention.
- La Fig. 3 représente une vue en coupe d'une pizza contenue dans un plateau selon l'invention.

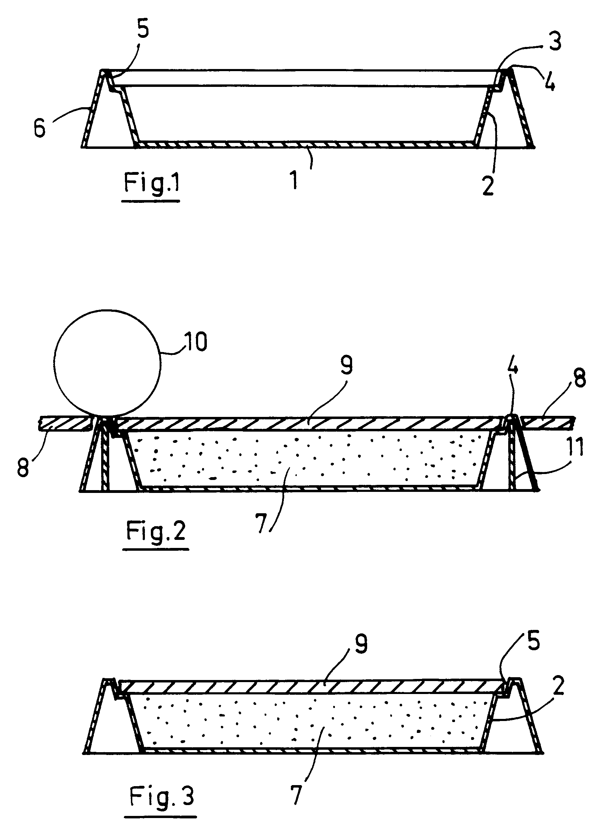

Comme on le voit à la Fig. 1 un plateau selon l'invention est constitué d'un fond 1 et d'une face latérale 2. Préférablement, le plateau est en matière plastique telle que du PVC. Si le plateau n'est destiné qu'à la fabrication du produit, le produit alimentaire congelé étant ensuite emballé sans ledit plateau, le plateau est préférablement en métal. A la partie supérieure de cette face latérale 2 est prévue une première collerette inférieure 3 qui s'étend dans le sens radial externe. Au-dessus de cette collerette inférieure 3 est prévue une deuxième collerette supérieure 4 dont le bord interne est radialement externe par rapport au bord externe de la collerette inférieure 3. Les deux collerettes inférieure 3 et supérieure 4 sont reliées par un flanc 5 préférablement tronconique.

Selon le mode de réalisation principal de l'invention, la collerette supérieure 4 est prolongée vers le bas par une paroi 6 qui s'étend jusqu'au niveau du fond 1 du plateau. Préférablement, cette paroi 6 est tronconique, le diamètre de sa base étant supérieur au diamètre de son sommet.

Comme on le voit le plateau est préférablement réalisé sous forme d'une feuille qui a pu être formée par emboutissage pour obtenir le profil désiré, mais il est évident que le plateau pourrait aussi être plein.

Pour la mise en oeuvre du procédé selon l'invention, une garniture 7, par exemple un coulis de tomates est disposée dans le plateau jusqu'à ce que le niveau supérieur de la garniture arrive au voisinage de la collerette inférieure 3. Ensuite une feuille 8 de pâte alimentaire est disposée au-dessus du plateau 1 et appliquée contre la collerette supérieure 4. Ceci peut être réalisé par tout moyen connu, par exemple au moyen d'un cylindre 10. Par poinçonnage de la feuille 8 contre la collerette supérieure 4, la feuille 8 est découpée et constitue ainsi le fond 9 de la pizza qui vient s'appuyer conte la face supérieure de la garniture 7 et la collerette inférieure 3 comme illustré Fig. 2.

Il est ainsi obtenu une pizza disposée dans un plateau dont la garniture 7 est située au fond d'un plateau et dont le fond 9 en pâte alimentaire est limité par le flanc 5 de la face latérale 2 du plateau, comme représenté à la Fig. 3.

Selon une variante de l'invention, pour le cas où le plateau ne présente pas de paroi verticale 6 prolongeant la collerette supérieure 4 ou pour le cas ou le matériau constituant le plateau n'est pas suffisamment rigide, un anneau 11, par exemple en métal est placé sous la collerette supérieure 4 pour éviter un affaissement du plateau lors du poinçonnage. Cet anneau 11 est illustré à la Fig. 2.

Le produit final obtenu peut ensuite être congelé, la pizza demeurant dans son plateau, puis disposé dans son emballage final.

## Revendications

1. Plateau, pour la réalisation d'un produit alimentaire constitué d'un fond en pâte alimentaire (9) et d'une garniture (7), muni d'un fond (1) et d'une paroi latérale (2) dont la partie supérieure présente une première collerette inférieure (3), s'étendant dans le sens radial externe, et une deuxième collerette supérieure (4), plus haute que la première et dont le bord interne est radialement externe par rapport au bord externe de la première collerette inférieure (3), reliée à cette première collerette inférieure (3) par un flanc (5) et dans lequel la collerette supérieure (4) est prolongée vers le bas par une paroi (6) qui s'étend jusqu'au niveau du fond (1) du plateau.

2. Procédé pour réaliser un produit alimentaire, constitué d'un fond en pâte alimentaire (9) et d'une garniture (7), dans lequel la garniture (7) est disposée dans un plateau selon la revendication précédente jusqu'à atteindre le niveau de la collerette inférieure (3) du plateau puis, une feuille de pâte alimentaire (8) est placée au-dessus dudit plateau et appliquée contre la collerette supérieure (4) du plateau jusqu'à découper par poinçonnage la feuille de pâte alimentaire (8) en produisant ainsi le fond (9) du produit alimentaire qui vient s'appuyer sur la collerette inférieure (3) du plateau et dans lequel, lors du poinçonnage de la feuille de pâte alimentaire (8), un anneau (11) est placé sous la collerette supérieure (4).

3. Produit alimentaire, constitué d'une garniture (7) et d'un fond en pâte alimentaire (9), placé dans un plateau selon la revendication 1, dans lequel la garniture (7) est située à la partie inférieure du plateau, la face supérieure de la garniture (7) étant au niveau de la collerette inférieure (3) du plateau, le fond en pâte alimentaire (9) étant situé au-dessus de la garniture (7), le bord de ce fond étant limité radialement par le flanc (5) du plateau reliant les collerettes inférieure (3) et supérieure (4).

## Claims

1. Dish for producing a food product consisting of an edible dough base (9) and a filling (7), having a bottom (1) and a lateral wall (2), the upper part of which has a first bottom flange (3) extending in the external radial direction, and a second top flange (4), higher than the first, the inner edge of which is radially external with respect to the outer edge of the first bottom flange (3), connected to this first bottom flange (3) by a side (5) and in which the top flange (4) is extended downwards by a wall (6) which extends as far as the level of the bottom (1) of the dish.

2. Process for producing a food product, consisting of an edible dough base (9) and a filling (7), in which the filling (7) is arranged in a dish according to the preceding claim so as to reach the level of the bottom flange (3) of the dish, and then a sheet of edible dough (8) is placed above the said dish and pressed against the top flange (4) of the dish until the edible dough sheet (8) is cut by stamping, thus producing the base (9) of the food product which rests on the bottom flange (3) of the dish and in which, when the sheet of edible dough (8) is stamped, a ring (11) is positioned under the top flange (4).

3. Food product consisting of a filling (7) and an edible dough base (9), placed in a dish according to claim 1, in which the filling (7) is situated at the bottom part of the dish, the top face of the filling (7) being at the level of bottom flange (3) of the dish, the edible dough base (9) being situated above the filling (7), the edge of this base being bordered radially by the side (5) of the dish connecting the bottom (3) and top (4) flanges.

## Patentansprüche

1. Form zur Herstellung eines aus einem Lebensmittelteig-Boden (9) und aus einem Belag (7) bestehenden Lebensmittels, bestehend aus einem Boden (1) und einer Seitenwand (2), deren oberer Teil einen ersten unteren Kragen (3), der sich radial nach außen erstreckt, und einen zweiten oberen Kragen (4) aufweist, der über dem ersten angeordnet ist und dessen Innenrand im Vergleich zum Außenrand des ersten unteren Kragens (3) radial nach außen versetzt ist, und der mit dem ersten unteren Kragen (3) durch eine Flanke (3) verbunden ist, und wobei der obere Kragen (4) durch eine Wandung (6) nach unten verlängert ist, die sich bis zur Ebene des Bodens (1) der Form erstreckt.

2. Verfahren zur Herstellung eines aus einem Lebensmittelteig-Boden (9) und aus einem Belag (7) bestehenden Lebensmittels, bei dem der Belag (7) in einer Form gemäß dem vorhergehenden Anspruch angeordnet wird, bis er die Höhe des unteren Kragens (3) der Form erreicht, woraufhin ein Blatt aus Lebensmittelteig (8) auf die Form gelegt und auf den oberen Kragen (4) der Form aufgedrückt wird, bis das Blatt des Lebensmittelteiges (8) durch Ausstanzen zerschnitten wird, wodurch der Boden (9) des Lebensmittels hergestellt wird, der sich auf dem unteren Kragen (3) der Form abstützt und wobei beim Ausstanzen des Blattes aus Lebensmittelteig (8) ein Ring (11) unter dem oberen Kragen (4) angeordnet wird.

3. Lebensmittel, bestehend aus einem Belag (7) und einem Lebensmittelteig-Boden (9), angeordnet in einer Form gemäß Anspruch 1, in der der Belag (7) in dem unteren Teil der Form angeordnet ist, wobei sich die Oberfläche des Belages (7) auf der Höhe des unteren Kragens (7) der Form befindet, der Lebensmittelteig-Boden (9) oberhalb des Belages (7) angeordnet ist und der Rand des Bodens radial durch den Flansch (7) der Form, welcher den unteren Kragen (3) und den oberen Kragen (4) verbindet, begrenzt wird.
